# EUROPEAN PATENT SPECIFICATION

(11) **EP 3 336 520 B1**
(45) Date of publication and mention of the grant of the patent: **20.07.2022**
(21) Application number: 16306700.2
(22) Date of filing: 15.12.2016
(51) Int. Cl.: G01N 17/00

(54) **CORROSION TEST CHAMBER FOR ARMOURED FLEXIBLE PIPE**
KORROSIONSPRÜFKAMMER FÜR EIN BEWEHRTES UND FLEXIBELES ROHR
CHAMBRE D'ESSAI DE CORROSION À TUYAU ARMÉ ET FLEXIBLE

(43) Date of publication of application: 20.06.2018
(73) Proprietor: TECHNIP N-POWER, 92400 Courbevoie (FR)
(72) Inventor: MIYAZAKI, Marcelo, 20270 RIO DE JANEIRO (BR); PIRES, Roberta, 220816041 RIO DE JANEIRO (BR); GUIMARÃES, Alessandro, 22210-030 RIO DE JANEIRO (BR); MORENO, Leonardo, 20550-090 RIO DE JANEIRO (BR); MOZA, Jucimar, 22611-201 RIO DE JANEIRO (BR); GIL, Paulo, 20950-120 RIO DE JANEIRO (BR)
(74) Representative: Lavoix

(56) References cited:
- EP-A1- 2 679 978
- DE-A1-102013 014 458
- RUBIN A ET AL: "Qualification of steel wire for flexible pipes", NACE ; INTERNATIONAL CORROSION CONFERENCE SERIES; CORROSION 2006, NACE, US, 31 December 2006 (2006-12-31), - 31 December 2006 (2006-12-31), pages 6149/1-6149/19, XP008156563, ISSN: 0361-4409

## Description

The present invention concerns an assembly according to the preamble of claim 1.

The test apparatus is used for example to make tests on samples of armoring wires used to reinforce a flexible pipe.

Such a pipe is used for example to transport a fluid (e.g. oil or natural gas), generally under high pressure, at the bottom of a body of water or from the bottom of a body of water towards the surface. To resist the very high axial tensile and radial forces, the pipe generally comprises a central pressure sheath surrounded by a plurality of concentric and superposed metallic and/or composite layers. In addition, the pipe generally comprises an external sheath to limit corrosion of said layers due to water ingress.

The pipe is in particular a flexible pipe of a type that is not bonded ("unbonded") or a bonded flexible pipe.

Such a pipe is for example manufactured in accordance with the standards API 17J (Specification for Unbonded Flexible Pipe, 4th edition - May 2014) and API RP 17B (Recommended Practice for Flexible Pipe, 5th edition - March 2014) established by the American Petroleum Institute.

The presence of corrosive fluids, such as carbon dioxide (CO₂) or hydrogen sulfide (H₂S), contained in the transported fluids may substantially decrease the service life of the flexible pipe.

These compounds migrate from the pipe bore, through the polymer sheath, creating an aggressive environment in the annular space formed by the pressure sheath and the external sheath and containing the armoring wires.

The corrosion may lead to a decrease of the mechanical strength of the armor wires and, in some critical cases, in failure of the wires.

To better understand the corrosion phenomena and to subsequently enable a suitable design of flexible pipes, experiments are made with small scale test benches to simulate an annulus environment. These experiments allow testing the influence of different physical parameters (fluids nature, fluids partial pressure, temperature, level of confinement, etc.) on the corrosion of a test sample representing the armoring wires of a flexible pipe.

A test apparatus is classically composed of a body with an internal test chamber, in which a metallic test sample is placed. An injection path allows injecting test fluids inside the test chamber to simulate the presence of corrosive fluids contained in a pipe.

EP 2 679 978 discloses a test apparatus used to test the corrosion of metallic armoring elements. Such test apparatus is not suitable to simulate realistic metallic armoring elements arrangements especially since the free volume in the test chamber is very high compared to the outer surface of the sample. Indeed, the test apparatus involves several plates in order to simulate the level of confinement of the annulus of a real flexible pipe. However, although the surface area of the plates can be calculated, the contact among the sample is not representative of the arrangement of the metallic armoring elements within the annulus of a real flexible pipe and may impact the level of confinement of the test apparatus. Consequently, the test apparatus simulates an environment which is not representative of conditions in the annulus of a real pipe and may lead to over conservative designs of flexible pipes.

DE 10 2013 014458 A1 discloses a device for checking the corrosion resistance of a test body with a test chamber. The device comprises a first pipe fluidly connected to the test chamber for injecting a first fluid, and a second pipe fluidly connected to the test chamber (14) for injecting a second fluid.

Rubin et al. in "Qualification of steel wire for flexible pipes", NACE; INTERNATIONAL CORROSION CONFERENCE SERIES; CORROSION 2006, 2006, disclose a study on the prediction of the fluid composition and pH of the annulus environment in unbonded flexible pipes.

One aim of the invention is to provide an assembly with a test apparatus which allows simulating realistic conditions for testing the behavior of a test sample, similar to those encountered in the annular space of a flexible pipe.

To this end, the subject-matter of the invention relates to an assembly according to claim 1.

The assembly according to the invention may comprise one or more of the features of claims 2 to 10.

The subject matter of the invention also relates to a method of testing a test sample using a test apparatus of the assembly described above, said method being according to claim 11.

The invention also relates to a test apparatus comprising a body defining a test chamber, the test chamber being delimited by a sample holding surface, a test sample placed inside the test chamber on the holding surface, and an injection inlet for injecting a test fluid into the test chamber, characterized in the test apparatus comprises a first polymeric layer interposed between the test sample and the sample holding surface.

The test apparatus according to the aforementioned type does not necessarily have a ratio of the free volume of the test chamber containing the test sample to the surface on the test sample equal or less than 0.1 mL/cm².

It may comprise one or more of the above features, taken into consideration in isolation or in accordance with any technically possible combination.

The invention will be better understood upon reading the description which will follow, given solely by way of example, and with reference being made to the accompanying drawings in which:
- Figure 1 is a partially stripped perspective view of a section of a flexible pipe;
- Figure 2 is an isometric view of the test apparatus according to the invention;
- Figure 3 is a transversal horizontal cross section of the test apparatus passing through F-F' axis;
- Figure 4 is a vertical cross section of the test apparatus passing through F-F' axis;
- Figure 5 is an example of test sample arrangement used in the test apparatus of the invention.

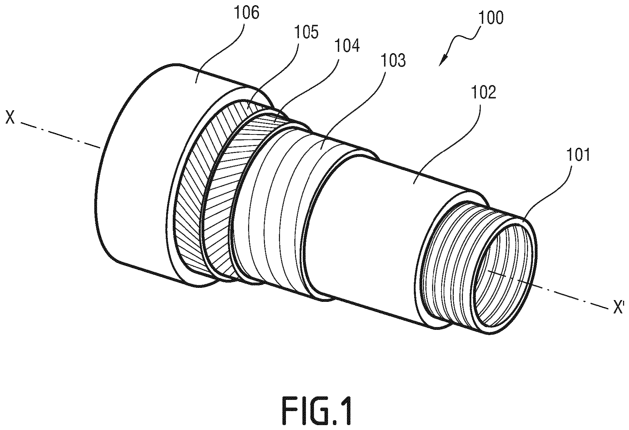

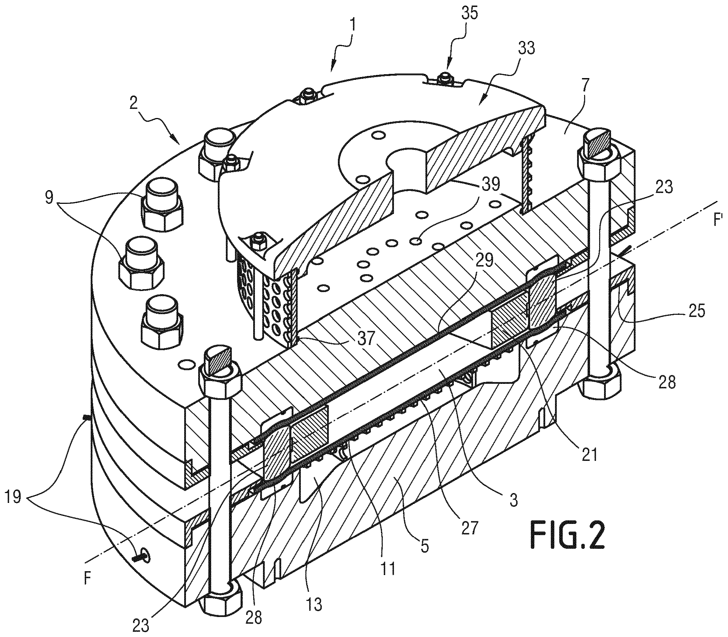

A test apparatus 1 according to the invention is shown in Figures 2 to 4. The test apparatus 1 is used in particular to evaluate corrosion processes which take place inside the annulus of a flexible pipe 100, shown in Figure 1, on the armoring elements.

Such a flexible pipe 100 is for example described in standards API 17J (4th edition - May 2014) and API RP 17B (5th edition - March 2014) published by the American Petroleum Institute (API).

As illustrated in Figure 1, the flexible pipe 100 comprises a plurality of concentric layers around the axis X-X'. The different layers will be described from the inner part to the outer part of the flexible pipe 100, i.e. by going further away radially from the axis X-X'.

The terms "inner", "inside" and "outer", "outside" have to be understood in a relative manner with reference to the central axis X-X' of the pipe 100, the terms "inner" and "inside" meaning generally closer or oriented towards the central axis X-X', the terms "outer" and "outside" being generally further away or oriented away from the central axis X-X'.

In the example of Figure 1, the flexible pipe 100 successively comprises a carcass 101, a pressure sheath 102, advantageously a pressure vault 103, a plurality of armoring layers 104 and 105 and an exterior sheath 106.

The carcass 101 is formed for example of a profiled metal strip that is wound in a spiral. The spiral windings of the strip are interlocked into each other, which allows for absorbing the radial crushing forces.

The helical winding of the profiled metal sheet forming the carcass 101 is short pitched, that is to say that it has a helix angle having an absolute value close to 90°, typically comprised between 75° and 95°.

In the example of Figure 1, the carcass 101 is disposed within the interior of the pressure sheath 102. The flexible pipe 100 is then referred to as "rough bore" as per the accepted English terminology on account of the geometry of the carcass 101.

By way of a variant (not shown), the flexible pipe 100 is free of any carcass 101. It is then referred to as "smooth bore" as per the accepted English terminology.

The carcass 101, if it exists, is surrounded by a first sheath made of a polymer material which constitutes the pressure sheath 102.

The polymer material is for example based on a polyolefin such as polyethylene, based on a polyamide such as PA11 or PA12, or based on fluorinated polymer such as polyvinylidene fluoride (PVDF).

The thickness of the pressure sheath 102 is for example comprised between 5 mm and 20 mm.

In a known manner, the pressure sheath 102 is designed to confine in a sealed manner the transported fluid in the central passage of the flexible pipe 100.

The pressure sheath 102 is surrounded by the pressure vault 103. The pressure vault 103 is designed to absorb the forces related to the pressure prevailing within the interior of the pressure sheath 102. It is for example formed of a metal profiled wire wound helically around the pressure sheath 102. The profiled wire generally has a complex geometry, in particular having a form shaped like a Z, T, U, K, X or I.

The pressure vault 103 is helically wound with a short pitch around the pressure sheath 102, that is to say, with a helix angle having an absolute value close to 90°, typically comprised between 75° and 90°.

The flexible pipe 100 comprises at least one reinforcing armoring layer 104 and 105 formed of a helical winding of at least one elongated armoring element.

In the example shown in Figure 1, the flexible pipe 100 includes two reinforcing armoring layers 104 and 105, in particular an interior reinforcing armoring layer 104, applied onto the pressure vault 103 and an exterior reinforcing armoring layer 105 around which is disposed the exterior sheath 106.

Each reinforcing armoring layer 104 and 105 includes longitudinal reinforcing armoring elements wound with a long pitch around the X-X' of the flexible pipe 100.

The reinforcing armoring elements of a first reinforcing armoring layer 104 are generally wound at an angle in the opposite direction relative to the armoring element of a second armoring layer 105. Thus, if the winding angle of the reinforcing armoring element of the first armor layer 104 is equal to +α, α being comprised between 20° and 55°, the winding angle of the reinforcing armoring element of the second armoring layer 105 disposed in contact with the first armor layer 104 is for example -α.

The reinforcing armoring elements are typically made of steel. In an alternative embodiment, the reinforcing armoring elements are made of a composite material. For example, the composite material may comprise longitudinal carbon fibers embedded in a thermoplastic or a thermoset matrix. The thermoplastic matrix is for example a polyamide, a polyolefin or any other material suitable for the present application and the thermoset is for example an epoxy resin or any other material suitable for the present application. The use of composite material for the reinforcing armoring elements brings several advantages such as a significant reduction in weight of the flexible pipe 100 while keeping good mechanical properties.

The reinforcing armoring elements have typically a width comprised between 5 mm and 22 mm. Their radial thickness is typically comprised between 2 mm and 7 mm. The cross section of the armoring elements is usually polygonal, e.g. rectangular or rounded, such as ellipsoidal or circular.

By way of a variant, the flexible pipe 100 is free of the pressure vault 103 and the reinforcing armoring layers 104, 105 are directly arranged on the pressure sheath 102. According to this variant, the reinforcing armoring elements which composed the armoring layers 104, 105 are wound at an angle close to 55°.

In a particular embodiment of the invention, the flexible pipe 100 comprises in addition a thermal insulation sheath arranged on the armoring layers 104, 105 and/or an anti-wear tape arranged between each armoring layers 104, 105 and the pressure vault 103.

The exterior sheath 106 is intended to prevent permeation of fluid from the exterior of the flexible pipe 100 to the interior. It is advantageously made of polymer material, in particular based on a polyolefin, such as polyethylene or polypropylene, based on a polyamide, such as PA11 or PA12, or based on a fluorinated polymer such as polyvinylidene fluoride (PVDF).

The thickness of the exterior sheath 106 is for example comprised between 5 mm and 15 mm.

The annulus is defined as the area comprised between the outer surface of the pressure sheath 102 and the inner surface of the exterior sheath 106. The annulus contains the pressure vault 103 and the armoring elements layers 104 and 105 and potentially the anti-wear tapes.

When fluids are transported inside the flexible pipe 100, corrosive fluids, for example H₂S or CO₂, can migrate inside the annulus by diffusion processes through the polymeric pressure sheath 102. The metal components of the annulus are then subjected to acid corrosion. This phenomenon can lead to reduce the lifetime of the flexible pipe 100 or even cause failure during use. In addition, corrosion of composite material within the annulus is not fully understood and may also decrease the lifetime of the flexible pipe 100. To accurately design the flexible pipe 100 it is thus important to be able to estimate corrosion rate into the annulus of metal and/or composite elements.

Confinement level is one factor which substantially influences the corrosion phenomena inside the annulus.

The confinement level in the annulus is defined as V/S ratio which is the ratio of the free volume (V) of the annulus area containing the pressure vault and the armoring elements layers to the surface (S) of the pressure vault and armoring layers.

The test apparatus 1 according to the invention is shown in Figures 2 to 4. It comprises a body 2 delimiting an internal space comprising a test chamber 3. Preferably, it further comprises at least a fluid inlet 15 for feeding the test chamber 3 with test fluid and advantageously a heating system. It further comprises sensors for sensing the test chamber 3.

The body 2 comprises a base 5 and an upper part 7 removably assembled on the base 5.

The base 5 and the upper part 7 are for example made of steel or of other metal alloy. They have here a cylindrical shape and have for example a pluridecimetric diameter, typically about 50 cm.

The base 5 and the upper part 7 are assembled together with fixings 9 which cross both parts. The base 5 and the upper part 7 are preferably assembled with a contact pressure of between 0.1 MPa and 200 MPa, preferably of between 10 MPa and 200 MPa. Such contact pressure allows the test apparatus 1 to sustain an internal pressure from 1 bar up to 100 bar.

The fixings 9 for example comprise a plurality of bolts composed of nuts and screws distributed at the circumference of the base 5 and of the upper part 7.

The internal space comprises the test chamber 3 and an intermediate injection chamber 13 separated one from another by a sample holding surface 11.

Preferably, the test chamber 3 is located at the center of the test apparatus 1 between the base 5 and the upper part 7.

The test chamber 3 is delimited upwardly by the upper part 7 and downwardly by the sample holding surface 11 placed horizontally above the intermediate injection chamber 13.

The intermediate injection chamber 13 is provided in the base 5 and has for example a circular shape.

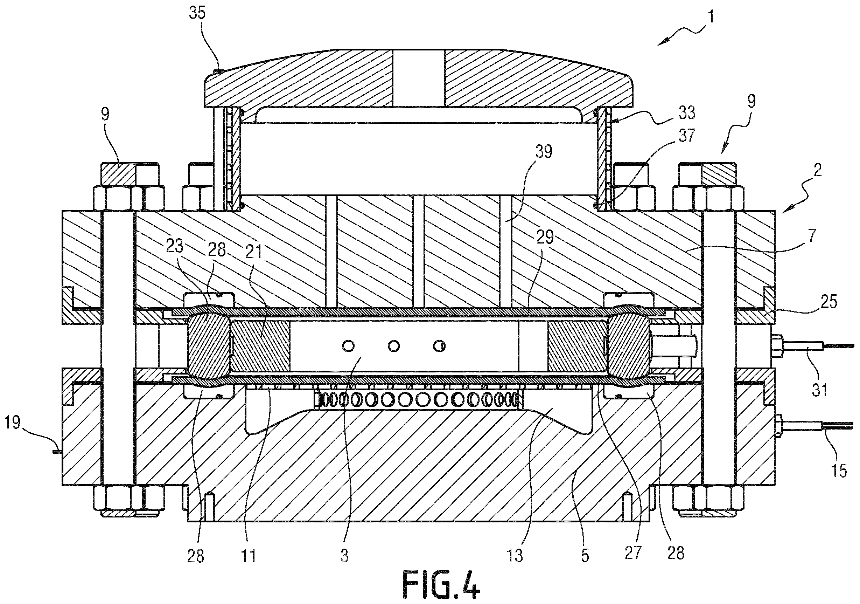

As seen on Figure 4, the intermediate injection chamber 13 is fed in test fluid by at least one fluid inlet 15 arranged circumferentially around the test apparatus 1. Advantageously, the or each fluid inlet 15 is crimped at the periphery of the test apparatus 1 and emerges in the intermediate injection chamber 13. The or each fluid inlet 15 is for example fed by a pump or a gas cylinder. The test fluid injected by the fluid inlet 15 is able to enter to the test chamber 3 through the intermediate injection chamber 13.

The or each fluid inlet 15 supplies corrosive fluids, such as H₂S or CO₂, or other fluids similar to those encountered in transported fluids by flexible pipes.

The sample holding surface 11 holds the test sample 17 inside the test chamber 3. Preferentially, the sample holding surface 11 is flat and has for example a diameter of around 40 cm. It comprises for example a plate made of a metallic, ceramic or a permeable material through which the test fluids are able to pass from the intermediate injection chamber 13 to the test chamber 3. The plate is for example arranged on a support.

Alternatively, the sampling holding surface 11 is made of a perforated plate or of a grid to allow the passage of the test fluids from the intermediate injection chamber 13 to the test chamber 3. The sampling holding surface 11 is preferably made with a material which does not interact chemically with the test fluids of the intermediate injection chamber 13.

As seen on Figures 2 to 4, the heating system here comprises a plurality of resistive heating elements 19 inserted horizontally into the base 5.

The heating elements 19 are located at the periphery of the base 5 and homogeneously heat the test fluid of the intermediate fluid chamber 13.

The temperature of the test fluid is typically adjusted between 25°C and 100°C.

Additionally, the test apparatus 1 may comprise an internal plate 21 inserted into the test chamber 3 to limit the size of the test chamber 3 and therefore the size of the test sample 17 and a confining ring 23 to seal the test chamber 3. The test apparatus 1 may further comprises a crimping device 25.

The internal plate 21 is a for example a cylindrical plate made of steel with a housing in the center. The housing has preferentially a square or a rectangular shape.

The confining ring 23 is placed around the internal plate 21 to seal the volume of the test chamber 3.

The confining ring 23 is for example a toroidal ring made of a metallic, composite or ceramic material.

The crimping device 25 is placed around the test apparatus 1 to limit the clamping level of the upper part 7 and the base 5 of the test apparatus 1 and thus to prevent any damage of the test apparatus 1.

The crimping device 25 is for example made of steel. The crimping device 25 comprises for example a lower ring and an upper ring arranged between the base 5 and the upper part 7.

The test sample 17 is placed inside the test chamber 3. The test sample 17 simulates the superposition of metallic and/or composite elements found in an annular space of a flexible pipe 100, i.e. the pressure vault 103 and the armoring layers 104, 105 of the flexible pipe 100 illustrated e.g. in Figure 1.

The test sample 17 comprises a plurality of parallel wire sections.

Advantageously, the test sample 17 comprises a first layer of parallel wire sections and at least a second layer of parallel wire sections disposed at an angle relative to the parallel wire sections of the first layer.

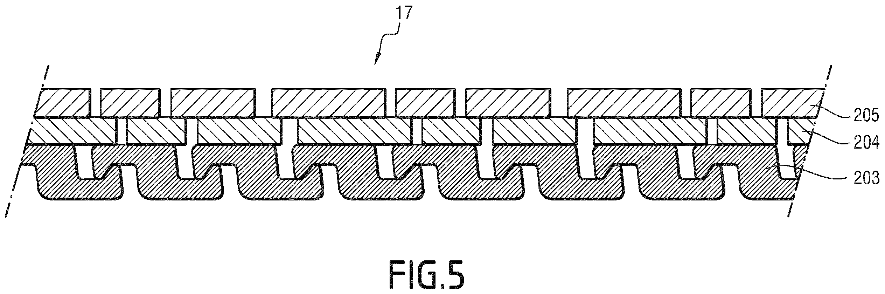

Figure 5 illustrates an example of geometrical arrangement of metallic and/or composite layers used as a test sample 17 with the test apparatus 1. It comprises three layers reproducing respectively from the bottom to the top, the metallic pressure vault 203 with a zeta-shape and two metallic and/or composite reinforcing armoring layers 204 and 205. The reinforcing armoring elements of a first armoring layer 204 are arranged at an angle in the opposite direction relative to the armoring element of a second armoring layer 205. Thus, if the angle of the reinforcing armoring element of the first armoring layer 204 is equal to +α, alpha being comprised between 20° and 55°, the angle of the reinforcing armoring element of the second armoring layer 205 disposed in contact with the first layer is for example -α.

In a variant, the test sample 17 advantageously comprises a polymeric layer interposed between the first and the second reinforcing layers 204 and 205 and between the first reinforcing layer 204 and the pressure vault 203.

According to the invention, the ratio V/S of the free volume of the test chamber 3 to the outer surface of the test sample 17 is equal or less than 0.1 mL/cm². It is comprised between 0.005 mL/cm² and 0.1 mL/cm², preferably between 0.0005 mL/cm² and 0.02 mL/cm².

The outer surface S of the test sample is defined as the sum of the outer surfaces of each wire contained in the test chamber 3.

As better shown on Figures 2 and 4, the test apparatus 1 may further comprise a first polymeric layer 27 interposed horizontally between the test sample 17 and the sample holding surface 11 and more particularly between the intermediate injection chamber 13 and the test chamber 3, and preferably a second polymeric layer 29 interposed horizontally between the test sample 17 and the top of the test chamber 3, and more particularly between the test chamber 3 and the upper part 7.

The first polymeric layer 27 simulates the pressure sheath 102 of a flexible pipe 100 described above and on Figure 1 through which gases generally diffuse.

The thickness of the first polymeric layer 27 is for example comprised between 4 mm and 20 mm.

Preferably, the confining ring 23 is placed at the periphery of the first polymeric layer 27 and thus the ends of the first polymeric layer 27 are crimped between the base 5 and the confining ring 23 to prevent the test fluid from entering into the test chamber 3 without passing through the first polymeric layer 27. Advantageously, a housing 28 is machined on the periphery of the base 5 to improve the sealing of the test chamber 3 and the intermediate injection chamber 13.

Consequently, the test fluid enters in the test chamber 3 only by diffusion processes through the first polymeric layer 27.

The second polymeric layer 29 simulates the exterior sheath 106 of a flexible pipe 100 as described before on Figure 1.

The thickness of the second polymeric layer 29 is for example comprised between 4 mm and 40 mm.

The first polymeric layer 27 and the second polymeric layer 29 are made in a material similar to the ones used respectively for the pressure sheath 102 and the exterior sheath 106 for example based on a polyolefin, such as polyethylene or polypropylene, based on a polyamide, such as the PA11 or PA12, or based on a fluorinated polymer such as polyvinylidene fluoride (PVDF). Obviously the material of the first polymeric layer 27 could differ from the material of the second polymeric layer 29.

The sensors are each placed in the test chamber 3 through a passage made in the confining ring 23 by at least one instrumentation port 31 located at the periphery of the apparatus 1 (Figure 4).

Several kinds of sensors are used to monitor the variations of physical parameters inside the test chamber 3.

For example, a pH sensor monitors pH variations inside the test chamber 3 all along the test to investigate the effects of pressure and temperature changes on pH.

These measurements are relevant to understand the corrosion phenomena which take place inside the test chamber 3.

Other sensors, for example, a displacement device, such as a LVDT (Linear Variable Differential Transformer) device or a thermocouple to monitor temperature, can be inserted in the apparatus 1 by the instrumentation port 31.

The displacement device is able to measure the creep of the polymeric layers 27 and 29 into the pressure vault and the armoring layers under pressure.

Advantageously, the test apparatus 1 comprises a gas reception enclosure 33 located above the test chamber 3.

The gas reception enclosure 33 comprises for example a cylindrical side wall and a closing member arranged on the cylindrical side wall.

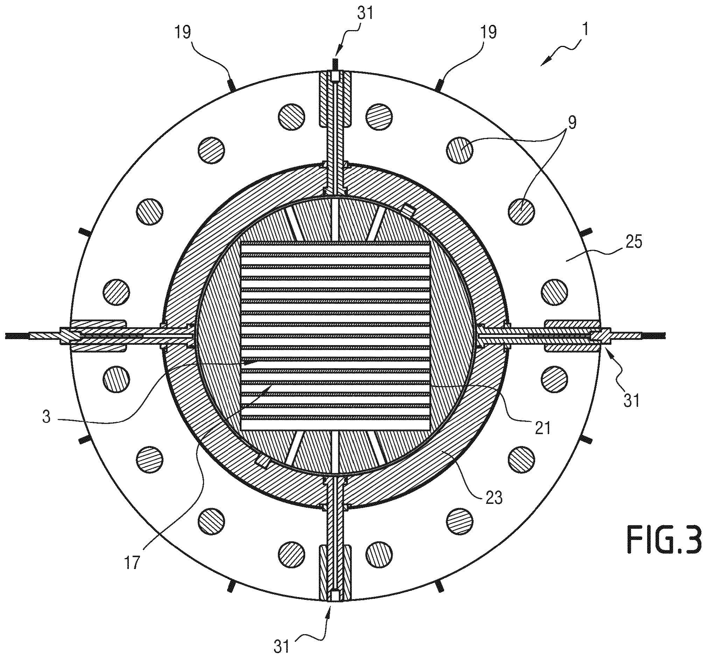

Preferably, the gas reception enclosure 33 is arranged above the upper part 7 of the test apparatus 1. It is attached on the upper part 7 by fixations visible on Figure 3.

The fixations for example comprise a plurality of bolts 35 composed of nuts and screws distributed at the circumference of the gas reception enclosure 33.

The gas reception enclosure 33 is sealed on the upper part 7 of the apparatus 1 with a ring 37. The ring 37 is for example a toroidal ring made in synthetic rubber or in polyurethane.

Advantageously, the upper part 7 delimits holes 39 to let the gas pass from the test chamber 3 to the reception gas chamber 33.

For example, several vertical holes 39 having a diameter of around 12 mm are made in the upper part 7 of the apparatus 1. Diffused gases are able to flow through the second polymeric layer 29 to the gas reception enclosure 33. Preferably, the ends of the second polymeric layer 29 are crimped between the upper part 7 and the confining ring 23. Advantageously, the housing 28 is also machined on the upper part 7 to improve the sealing of the test chamber 3.

Consequently, the test fluid enters the gas reception enclosure 33 only by diffusion processes through the second polymeric layer 29.

The gas reception enclosure 33 collects the gas for characterization and treatment.

Advantageously, the gas reception enclosure 33 is connected to a gas analysis equipment such as a gas chromatograph, a mass spectrometer and/or individual analyzers to determine the nature of the different gases.

A method of testing a test sample 17 according to the invention will be now be described.

Initially, the test apparatus 1 is split in two parts with the base 5 apart from the upper part 7.

The sample holding surface 11 is put in place above the intermediate injection chamber 13.

The lower ring of the crimping device 25 is then arranged on the base 5.

Preferably, the first polymeric layer 27 is then placed above the sample holding surface 11. The confining ring 23 is fixed at the periphery of the first polymeric layer 27 to prevent the test fluid from entering into the test chamber 3 without passing through the first polymeric layer 27.

The sensors are then placed through the instrumentation port machined in the confining ring 23.

The internal plate 21 is subsequently arranged above the sample holding surface 11 and preferably above the first polymeric layer 27.

The test sample 17, made of a plurality of metallic and/or composite elements layers, is inserted in the test chamber 3 inside the internal plate 21 layer by layer.

The upper ring of the crimping device 25 is then arranged on the base 5 and preferably, the second polymeric layer 29 is then arranged above the test sample 17 to close the test chamber 3.

The upper part 7 of the test apparatus 1 is subsequently applied above the base 5. The fixings 9 are then fixed between the base 5 and the upper part 7 of the apparatus 1 forming a sealed test chamber 3 with a V/S ratio equal or less than 0.1 mL/cm².

A test fluid is injected into the test chamber 3 through the intermediate injection chamber 13 fed by the fluid inlet 15.

The test fluid passes into the test chamber 3 by diffusion through the first polymeric layer 27.

The sensors are then activated to measure the pH during the experiment and the creep of the polymeric layers 27 and 29 into the pressure vault and the armoring layers under pressure.

The diffused gases through the second polymeric layer 29 are collected by the gas reception enclosure 33 for further analysis.

Thanks to the invention, it is possible to carry out representative tests which provide reliable results on the nature of corrosion susceptible to occur in the annulus of a flexible pipe. The test apparatus 1 according to the invention reproduces an environment very similar to the annular space of a flexible pipe.

More particularly, the confinement of the test sample 17 in the test chamber 3 is comprised between 0.005 mL/cm² and 0.1 mL/cm², preferably between 0.0005 mL/cm² and 0.02 mL/cm², which is very similar to the confinement in an annular space of a flexible pipe.

Moreover, the first and second polymer layers 27 and 29 correspond respectively to the pressure sheath 102 and to the exterior sheath 106 of a flexible pipe 100. Thanks to these polymeric layers, it is possible to reproduce the diffusion processes of a real flexible pipe 100. Surprisingly, it has been found by the inventors that the pressure sheath 102 and exterior sheath 106 give spatial homogeneity of gases reaching the pressure vault 103 and armoring layers 104, 105 which may impact their level of corrosion. In addition, the gaps and contacts between layers of a real flexible pipe are reproduced in this test apparatus 1 which leads to representative corrosion rates of a real flexible pipe.

Indeed, in the test apparatus 1 according the invention, the different metallic and/or composite elements of the test sample 17 can be arranged similarly to a real flexible pipe arrangement having a plurality of metallic and/or composite armoring layers. This geometrical arrangement may impact the level and the location of corrosion.

In addition, the arrangement of the test apparatus can be easily modified so any design of flexible pipes can be reproduced. For example, the arrangement and composition of further polymeric layers or metallic wires can be added or modified.

The test apparatus 1 is designed to be used in a broad range of internal pressure (up to 100 bars) and temperature (up to 100°C).

The test apparatus 1 allows a continuous monitoring of the pH conditions under pressure during all along the test. This is relevant to investigate the effects of the pressure and temperature on pH evolution.

Thanks to the gas reception enclosure 33, it is also possible to calculate the diffusion rate of the fluids by comparing the injected flux in the intermediate fluid chamber 13 and the collected flux by the gas reception enclosure 33.

In a variant, the test sample 17 comprises only one layer of parallel wire sections.

## Claims

1. An assembly comprising a test apparatus (1) and a test sample (17), the assembly comprising:
- a body (2) defining a test chamber (3), the test chamber (3) being delimited by a sample holding surface (11), the test sample (17) placed inside the test chamber (3) on the sample holding surface (11), the test sample (17) comprising a plurality of wire sections,
- a fluid inlet (15) for injecting a test fluid into the test chamber (3),
**characterized in that** the test apparatus (1) further comprises:
- a first polymeric layer (27) interposed between the test sample (17) and the sample holding surface (11),
- an intermediate injection chamber (13), located below the sample holding surface (11), the sample holding surface (11) allowing the passage of test fluid from the intermediate injection chamber (13) to the test chamber (3), the first polymeric layer (27) being interposed between the intermediate injection chamber (13) and the test chamber (3).

2. The assembly according to claim 1, wherein the sample holding surface (11) is flat.

3. The assembly according to any one of the preceding claims, wherein the test sample (17) comprises a plurality of parallel wire sections.

4. The assembly according to any one of the preceding claims, wherein the test sample (17) comprises a first layer of parallel wire sections and at least a second layer of parallel wire sections disposed at an angle relative to the parallel wire sections of the first layer.

5. The assembly according to any one of the preceding claims, wherein the test apparatus (1) comprises a confining ring (23) at the periphery of the first polymeric layer (27) to prevent the test fluid from entering into the test chamber (3) without passing through the first polymeric layer (27).

6. The assembly according to any one of the preceding claims, wherein the test apparatus (1) comprises a second polymeric layer (29) located above the test sample (17), between the test sample (17) and the top of the test chamber (3).

7. The assembly according to any one of the preceding claims, wherein the test apparatus (1) comprises a reception gas enclosure (33) located above the test chamber (3) to receive the gases arising from the test chamber (3).

8. The assembly according to claim 7, wherein the body (2) delimits holes (39) to let the gas pass from the test chamber (3) to the reception gas enclosure (33).

9. The assembly according to any one of the preceding claims, wherein the test apparatus (1) comprises at least a sensor arranged inside the test chamber (3) through at least an instrumentation port (31).

10. The assembly according to any one of the preceding claims, wherein the test apparatus (1) comprises an internal plate (21) inserted into the test chamber (3) to limit the size of the test chamber (3).

11. Method of testing the test sample with the test apparatus of the assembly of any of the preceding claims, said method including -injecting a test fluid into the test chamber (3) using a fluid inlet (15).

## Patentansprüche

1. Anordnung, umfassend eine Prüfvorrichtung (1) und eine Prüfprobe (17), die Anordnung umfassend:
- einen Körper (2), der eine Prüfkammer (3) definiert, wobei die Prüfkammer (3) durch eine Probenhaltefläche (11) begrenzt ist, wobei die Prüfprobe (17) innerhalb der Prüfkammer (3) auf der Probenhaltefläche (11) angeordnet ist, die Prüfprobe (17) umfassend eine Vielzahl von Drahtabschnitten,
- einen Fluideinlass (15) zum Einspritzen eines Prüffluids in die Prüfkammer (3),
**dadurch gekennzeichnet, dass** die Prüfvorrichtung (1) ferner Folgendes umfasst:
- eine erste Polymerschicht (27), die zwischen der Prüfprobe (17) und der Probenhaltefläche (11) eingefügt ist,
- eine Einspritzzwischenkammer (13), die sich unter der Probenhaltefläche (11) befindet, wobei die Probenhaltefläche (11) den Durchgang von Prüffluid aus der Einspritzzwischenkammer (13) zu der Prüfkammer (3) ermöglicht und die erste Polymerschicht (27) zwischen der Einspritzzwischenkammer (13) und der Prüfkammer (3) eingefügt ist.

2. Anordnung nach Anspruch 1, wobei die Probenhaltefläche (11) flach ist.

3. Anordnung nach einem der vorherigen Ansprüche, wobei die Prüfprobe (17) eine Vielzahl von parallelen Drahtabschnitten umfasst.

4. Anordnung nach einem der vorherigen Ansprüche, wobei die Prüfprobe (17) eine erste Lage von parallelen Drahtabschnitten und mindestens eine zweite Lage von parallelen Drahtabschnitten umfasst, die in einem Winkel in Bezug auf die parallelen Drahtabschnitten der ersten Lage angeordnet sind.

5. Anordnung nach einem der vorherigen Ansprüche, wobei die Prüfvorrichtung (1) einen Begrenzungsring (23) an dem Umfang der ersten Polymerschicht (27) umfasst, um zu verhindern, dass das Prüffluid in die Prüfkammer (3) eindringt, ohne durch die erste Polymerschicht (27) zu verlaufen.

6. Anordnung nach einem der vorherigen Ansprüche, wobei die Prüfvorrichtung (1) eine zweite Polymerschicht (29) umfasst, die sich oberhalb der Prüfprobe (17) zwischen der Prüfprobe (17) und der Oberseite der Prüfkammer (3) befindet.

7. Anordnung nach einem der vorherigen Ansprüche, wobei die Prüfvorrichtung (1) ein Gasaufnahmegehäuse (33) umfasst, das sich über der Prüfkammer (3) befindet, um die aus der Prüfkammer (3) austretenden Gase aufzunehmen.

8. Anordnung nach Anspruch 7, wobei der Körper (2) Löcher (39) begrenzt, damit das Gas aus der Prüfkammer (3) in die Gasaufnahmekammer (33) gelangt.

9. Anordnung nach einem der vorherigen Ansprüche, wobei die Prüfvorrichtung (1) mindestens einen Sensor umfasst, der durch mindestens einen Instrumentenanschluss (31) innerhalb der Prüfkammer (3) angeordnet ist.

10. Anordnung nach einem der vorherigen Ansprüche, wobei die Prüfvorrichtung (1) eine in die Prüfkammer (3) eingesetzte Innenplatte (21) zum Begrenzen der Größe der Prüfkammer (3) umfasst.

11. Verfahren zum Prüfen der Prüfprobe mit der Prüfvorrichtung der Anordnung nach einem der vorherigen Ansprüche, wobei das Verfahren ein Einspritzen eines Prüffluids unter Verwendung eines Fluideinlasses (15) in die Prüfkammer (3) umfasst.

## Revendications

1. Ensemble comprenant un appareil d'essai (1) et un échantillon d'essai (17), l'ensemble comprenant :
- un corps (2) définissant une chambre d'essai (3), la chambre d'essai (3) étant délimitée par une surface de support d'échantillon (11), l'échantillon d'essai (17) étant placé à l'intérieur de la chambre d'essai (3) sur la surface de support d'échantillon (11), l'échantillon d'essai (17) comprenant une pluralité de sections de fil,
- une entrée de fluide (15) permettant d'injecter un fluide d'essai dans la chambre d'essai (3),
**caractérisé en ce que** l'appareil d'essai (1) comprend en outre :
- une première couche polymère (27) intercalée entre l'échantillon d'essai (17) et la surface de support d'échantillon (11),
- une chambre d'injection intermédiaire (13), située en dessous de la surface de support d'échantillon (11), la surface de support d'échantillon (11) permettant le passage du fluide d'essai entre la chambre d'injection intermédiaire (13) et la chambre d'essai (3), la première couche polymère (27) étant intercalée entre la chambre d'injection intermédiaire (13) et la chambre d'essai (3).

2. Ensemble selon la revendication 1, dans lequel la surface de support d'échantillon (11) est plate.

3. Ensemble selon l'une quelconque des revendications précédentes, dans lequel l'échantillon d'essai (17) comprend une pluralité de sections de fil parallèles.

4. Ensemble selon l'une quelconque des revendications précédentes, dans lequel l'échantillon d'essai (17) comprend une première couche de sections de fil parallèles et au moins une deuxième couche de sections de fil parallèles disposée selon un certain angle par rapport aux sections de fil parallèles de la première couche.

5. Ensemble selon l'une quelconque des revendications précédentes, dans lequel l'appareil d'essai (1) comprend un anneau de confinement (23) à la périphérie de la première couche polymère (27) pour empêcher le fluide d'essai d'entrer dans la chambre d'essai (3) sans traverser la première couche polymère (27).

6. Ensemble selon l'une quelconque des revendications précédentes, dans lequel l'appareil d'essai (1) comprend une seconde couche polymère (29) située au-dessus de l'échantillon d'essai (17), entre l'échantillon d'essai (17) et la partie supérieure de la chambre d'essai (3).

7. Ensemble selon l'une quelconque des revendications précédentes, dans lequel l'appareil d'essai (1) comprend une enceinte de gaz de réception (33) située au-dessus de la chambre d'essai (3) pour recevoir les gaz provenant de la chambre d'essai (3).

8. Ensemble selon la revendication 7, dans lequel le corps (2) délimite des trous (39) pour laisser le gaz passer de la chambre d'essai (3) à l'enceinte de gaz de réception (33).

9. Ensemble selon l'une quelconque des revendications précédentes, dans lequel l'appareil d'essai (1) comprend au moins un capteur agencé à l'intérieur de la chambre d'essai (3) à travers au moins un orifice d'instrument (31).

10. Ensemble selon l'une quelconque des revendications précédentes, dans lequel l'appareil d'essai (1) comprend une plaque interne (21) insérée dans la chambre d'essai (3) pour limiter la taille de la chambre d'essai (3).

11. Procédé d'essai de l'échantillon d'essai avec l'appareil d'essai de l'ensemble selon l'une quelconque des revendications précédentes, ledit procédé comprenant l'injection d'un fluide d'essai dans la chambre d'essai (3) à l'aide d'une entrée de fluide (15).
